# EUROPEAN PATENT APPLICATION

(11) **EP 4 270 288 A1**
(43) Date of publication of application: **01.11.2023**
(21) Application number: 23168099.2
(22) Date of filing: 14.04.2023
(51) Int. Cl.: G06Q 20/34, G06Q 40/02

(54) **METHOD AND APPARATUS FOR PROVISION OF A VIRTUAL CARD HAVING A PERSISTENT PRIMARY ACCOUNT NUMBER**

(30) Priority: 25.04.2022 US 202217728386
(71) Applicant: Affirm, Inc., San Francisco, CA 94108 (US)
(72) Inventor: HAIDER, Thomas, San Francisco, 94108 (US); DAO, Angela, San Francisco, 94108 (US)
(74) Representative: Piotrowicz, Pawel Jan Andrzej

(57) **Abstract**

A method of processing communications and actions of parties to a transaction may include receiving a request from a customer to use a virtual card to affect the transaction with a vendor or merchant. The virtual card may have a persistent primary account number (PAN) that enables the virtual card to be used for obtaining financing for multiple transactions without changing the persistent PAN. The method may further include facilitating payment of the vendor or merchant on behalf of the customer in response to the request, establishing a loan for the customer based on the transaction, and facilitating servicing the loan based on an activity of the customer after the loan is established.

## Description

### TECHNICAL FIELD

Example embodiments generally relate to financial industry technologies and, in particular, relate to apparatuses, systems, and methods for facilitating commerce and for enabling customers to use a single virtual card with a persistent primary account number for multiple different transactions.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), there is not much flexibility at all after the decision is made as to which option to select.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers.

Upon this stage, two separate technologies have recently begun to play a more prominent role. First, the resurgence of buy now, pay later (BNPL) financing with technical advantages provided by computer driven platforms, and on fair land flexible terms, has empowered many consumers to manage their finances in ways not previously seen. Second, the issuance of virtual cards (credit and/or debit) enables customers to make online or in-store purchases using such cards similar to the way physical credit cards operate, but with far greater flexibility in obtaining the cards.

A combination of some of the advantages of these two technologies is certainly attractive. However, a significant technological problem exists in relation to doing so. Although virtual cards can be obtained via application either ahead of time, or proximate to the actual purchase of an item, with relatively quick credit checks and decisions being made possible, each instance where the virtual card is granted corresponds to a separate issuance of an account number (which may be referred to as a primary account number (PAN)) specific to the transaction that is to be conducted. This one-to-one correspondence between the virtual card issued, and its PAN, makes the control and flow of not only the processing of the transaction possible, but also is effectively required for tracking which loan is associated with which transaction. The one-to-one correspondence has therefore typically been seen as an essential and immutable characteristic of virtual cards. Nevertheless, example embodiments seek to break this one-to-one correspondence and unlock a host of advantages that may be achieved when the technological capability of making this break is employed.

### BRIEF SUMMARY OF SOME EXAMPLES

Accordingly, some example embodiments may enable the provision of technical means by which to give customers the ability to use the same virtual card to support multiple transactions, and therefore also multiple corresponding loans. Such power may enable customers to have access to credit in a buy now, pay later format (or others) with the convenience of doing so with a single virtual card.

In an example embodiment, a method of processing communications and actions of parties to a transaction may be provided. The method may include receiving a request from a customer to use a virtual card to affect the transaction with a vendor or merchant. The virtual card may have a persistent primary account number (PAN) that enables the virtual card to be used for obtaining financing for multiple transactions without changing the persistent PAN. The method may further include facilitating payment of the vendor or merchant on behalf of the customer in response to the request, establishing a loan for the customer based on the transaction, and facilitating servicing the loan based on an activity of the customer after the loan is established.

In another example embodiment, an apparatus for processing communications and actions of parties to a transaction may be provided. The apparatus may include processing circuitry configured for receiving a request from a customer to use a virtual card to affect the transaction with a vendor or merchant. The virtual card may have a persistent primary account number (PAN) that enables the virtual card to be used for obtaining financing for multiple transactions without changing the persistent PAN. The processing circuitry may further be configured for facilitating payment of the vendor or merchant on behalf of the customer in response to the request, establishing a loan for the customer based on the transaction, and facilitating servicing the loan based on an activity of the customer after the loan is established.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram showing control flow for account setup and preparing and using a virtual card in accordance with an example embodiment;
FIG. 4 illustrates an example of a virtual card generated in accordance with an example embodiment;
FIG. 5 illustrates a block diagram of control flow for product return processing in accordance with an example embodiment; and
FIG. 6 shows a block diagram of a method for processing communications and actions of parties to a transaction in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage individual transactions before, during and also sometimes after the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in real time with added flexibility to determine terms upon which each transaction will be executed using a single virtual card that employs a persistent PAN. In other words, instead of merely initiating a platform for supporting buy now, pay later transactions, or transactions financed by other means, example embodiments provide customers with technical means by which to use a single virtual card to buy multiple things or services using the single virtual card without needing to get a new virtual card and new PAN for each transaction. This creates a relationship of one card (and one PAN) to many different transactions. This stands in contrast to today's paradigm in which each virtual card (and PAN) has a one-to-one relationship with a corresponding transaction. Moreover, example embodiments allow changing the terms that govern processing of transactions before each transaction while still maintaining the same card, and same PAN. In this way, the PAN becomes "persistent," as noted above. The creation of a card with a persistent PAN, and one platform, managed by the facilitator, for the interaction of multiple parties to enable usage of the persistent PAN card with prior determination of how each transaction will be handled provides a flexible and yet cohesive experience for customers that maximizes responsible access to financial freedom and satisfaction.

Example embodiments not only provide the SFP platform, but also provide various enabling technologies that may facilitate operation of the SFP platform itself or of modules that may interact with the SFP platform for processing transactions with a virtual card that employs a persistent PAN. Example embodiments therefore provide the virtual card having the persistent PAN, supporting structures and technologies for its use, and also for processing returns of products after the virtual card has been used. In this regard, the one-to-one relationship between PAN of a virtual card and a transaction would normally enable handling of a return since the return can be associated directly with the correct loan or transaction without any ambiguity. However, with a persistent PAN for the virtual card, new technology must be leveraged to handle returns since there is ambiguity as to which transaction or loan the returned product is associated. In other words, example embodiments may also provide for enhancement of functionalities associated with the environment that is created by the SFP platform. The SFP platform may provide a mechanism by which to enhance commerce in a responsible way that is both empathetic and empowering to customers.

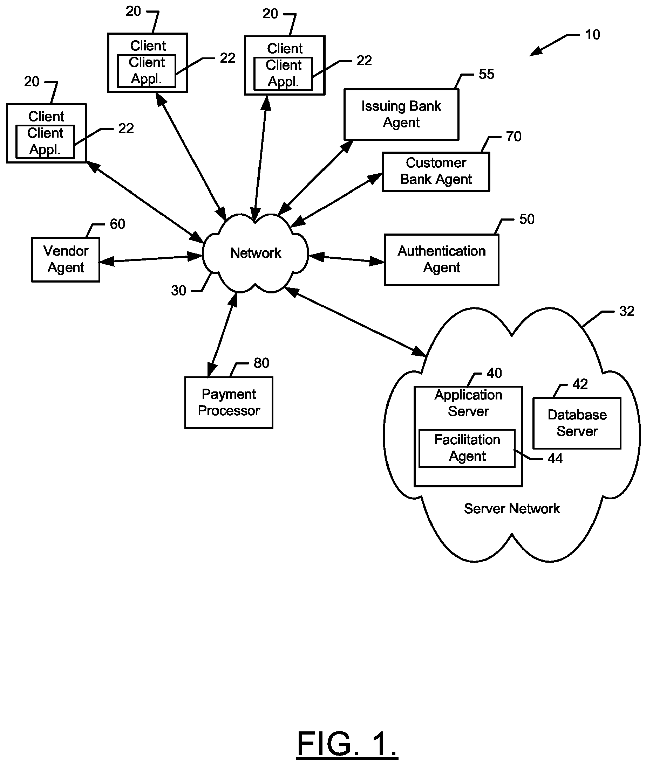

An example embodiment of the invention will now be described in reference to FIG. 1, which illustrates an example system in which an embodiment of the present invention may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the SFP platform 10. Furthermore, in some cases, some embodiments may be practiced on a single client without any connection to the SFP platform 10.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below. In an example embodiment, the client application 22 may be employed to request, configure or use a virtual card, as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to the SFP platform 10, and more particularly relating to facilitating transactions where the details of setting the transaction will be determined after the transaction. For example, the application server 40 may be configured to provide for storage of information descriptive of events or activities associated with the SFP platform 10 and the execution of a financial transaction on behalf of a customer in real time, while delaying the customers decision on how to settle the transaction to a later time. In some cases, data and/or services may be exchanged amongst members, where specific needs or desires of the members are aligned with respect to playing their respective roles in connection with conducting a financial transaction using a virtual card with a persistent PAN as described herein.

In some embodiments, for example, the application server 40 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 40 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download to execute functionalities described herein in a client/server relationship.

In an example embodiment, the client application 22 may therefore include application programming interfaces (APIs) and other web interfaces to enable the client 20 to conduct business or transactions via the SFP platform 10. The client application 22 may include a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may enable the customer to review monthly statements, request a virtual card, change settings associated with the virtual (or digital) card, access or adjust information associated with the customer account, or receive help or other information. Budgeting tools and other useful information and other useful tools for managing the finances of the customer may also be available via the client application 22 in some cases.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or vendors in real-time) may be accomplished by a particular entity (namely the facilitation agent 44 residing at the application server 40). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a vendor agent 60, a customer bank agent 70, and a payment processor 80. The facilitation agent 44 may be configured to interact with, or otherwise facilitate interactions between, each of the bank authentication agent 50, the issuing bank agent 55, the vendor agent 60, the customer bank agent 70, and the payment processor 80 in order to carry out example embodiments as described herein. Thus, each of the bank authentication agent 50, the issuing bank agent 55, the vendor agent 60, the customer bank agent 70, and the payment processor 80 should be understood to be a computer, server, smart phone, or other technical component or module associated with a respective party (e.g., an authenticating bank, issuing bank, a vendor, a customer bank, and a payment service, respectively) that is capable of communication with other parties via the network 30, and under control of or responsive to facilitating communication by the facilitation agent 44.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of the debit or credit card on behalf of the facilitation agent 44 and be responsible for directly paying the merchants and vendors during a transaction initiated by the customer via the debit or credit card.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenticator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account. In an example embodiment, the customer may request a virtual card (e.g., a virtual credit card, or other virtual or digital card) from the facilitation agent 44 to enroll the customer as a member of the SFP platform 10 and enable the customer to make purchases via the virtual card with merchants or vendors via the network 30 (e.g., for online purchases) or in-store. During subscription or registration for the virtual card, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44. Credit checks or other activities enabling the customer to be approved for issuance of the virtual card may then be accomplished by the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online. Payments may be provided to the merchant or vendor on behalf of the customer when using the virtual card to make a purchase, and the corresponding amount of the purchase may be converted into a loan (e.g., a BNPL loan or other loan) for the customer. Payments may also or alternatively be made by the customer to service the loan via the payment processor 80.

The customer bank agent 70 may change for each respective one of the clients 20 (and therefore for each respective customer). Similarly, the vendor agent 60 may change for each respective transaction since different vendors may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase in real time from a vendor associated with the vendor agent 60 either online or in-store using the virtual card issued to the customer. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44. In some cases, the customer may be provided with the virtual card with a persistent PAN that can be used to initiate transactions with vendors as described in greater detail below.

As noted above, the virtual card may be issued by, or in cooperation with, the issuing bank. The virtual card may be associated with the user account, and may provide identifying information needed to initiate operation of the SFP platform 10 (and the facilitation agent 44) as described herein when the customer uses the virtual card to make a purchase with a vendor. The virtual card may be presented via display or call-up from a mobile wallet for such purpose and tap-to-pay or other technologies may be used in connection with initiating the transaction in-store. Otherwise, the card number provided on the virtual card, which may be unique to the user account, may be provided to the vendor to initiate the transaction via online interfaces. Thus, the virtual card may exist in a mobile wallet or other smartphone context for initiating transactions in-store or online. In such a context, the client application 22 may also or alternatively be the means by which the transaction is initiated or handled. Thus, it should be appreciated that the client application 22 could be used to set up the user account and user profile and/or to conduct individual transactions.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, and determining credit limits or making credit extension decisions.

The issuing bank may have an agreement or relationship with the entity associated with the facilitation agent 44 that enables the facilitation agent 44 to engage the issuing bank to extend funds to a merchant or vendor on behalf of the customer in response to instruction from the facilitation agent. The facilitation agent 44 may therefore coordinate communications and funds transferring between members or parties of the SFP platform 10 to facilitate payment transactions that can be the basis for a loan (e.g., a BNPL) to the customer in the amount financed (plus any service charges or that may be applied and agreed to). In this regard, the customer may approach the vendor with the virtual card (online or in person) in order to initiate a transaction. The virtual card may be provided for payment, and the corresponding indication of a pending transaction may be communicated (e.g., via the SFP platform 10) by the vendor agent 60 and/or the client 20 via the network 30. The communication and activities that ensue thereafter, and that require coordination (or facilitation) via technical means, will now be described greater detail below.

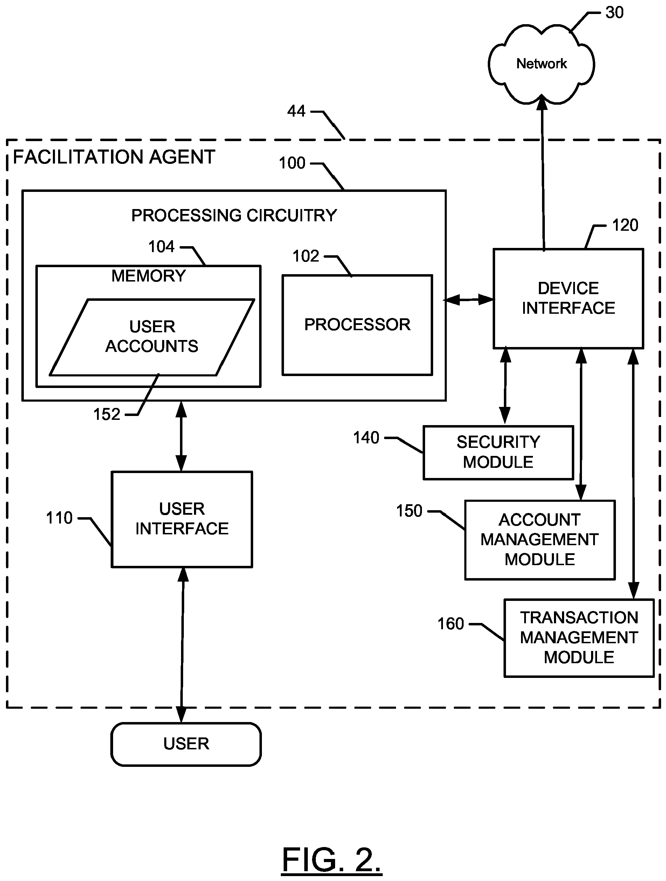

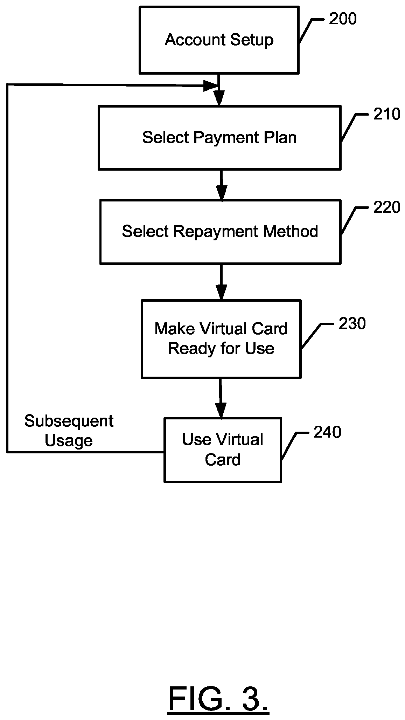

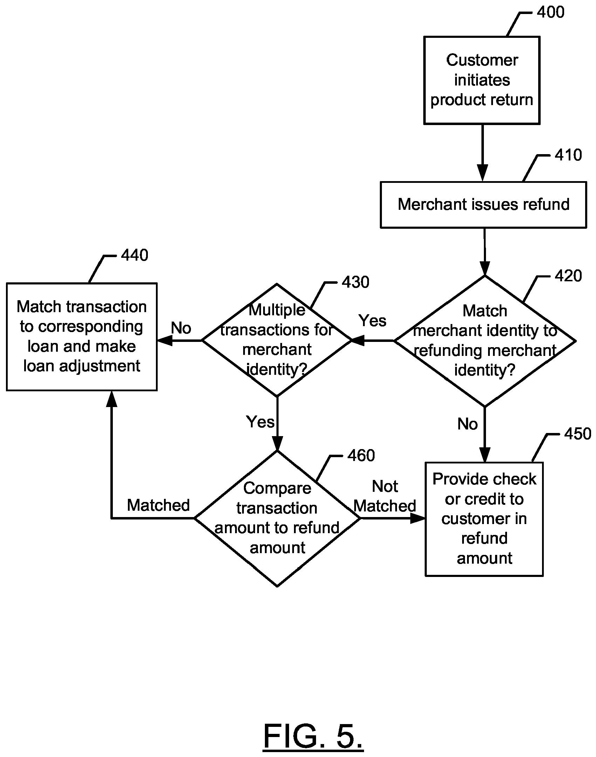

Regardless of how the transactions are initiated, the SFP platform 10 of FIG. 1 may be used before, during and after the time of the transaction in order to enable the facilitation agent 44 to set up the user account, make determinations necessary to initiate the transactions in real time responsive to initiation of the transaction, and facilitate enabling the customer to determine settings for the virtual card that impact its operation and the treatment of transactions conducted using the virtual card prior to each respective transaction. Each of these activities may have its own respective timing and communications that are facilitated by the facilitation agent 44 and FIGS. 3 and 5 illustrate example control flows associated with some scenarios. However, prior to examining each respective scenario, the structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 40 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 40) or by devices in a client/server relationship (e.g., the application server 40 and one or more clients 20). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located. For example, in some cases, the user interface 110 may be disposed at a remote device (e.g., the client 20) and may therefore be operable through communication via the network 30.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 42) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer or user accounts (and a corresponding user profile), the provision of a virtual card in association with the customer account (including instructions to generate a display of the virtual card at one of the clients 20) where the virtual card has a persistent PAN, and the coordination of communication and fund transfers to support the operations of the SFP platform 10 as described herein. The tools may be provided in the form of various modules that may be instantiated by configuration of the processing circuitry 100. FIG. 2 illustrates some examples of modules that may be included in the facilitation agent 44 and that may be individually configured to perform one or more of the individual tasks or functions generally attributable to the facilitation agent 44 according to an example embodiment. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include a security module 140. The security module 140 may be configured to enforce data security and data/user access control. In some example embodiments, the security module 140 may employ authentication and authorization tools to manage the provision of access to customers or other SFP platform 10 members or entities wishing to access the SFP platform 10. The security module 140 may operate on queries or communications in real time as such queries or communications are occurring.

The facilitation agent 44 may also include an account management module 150. The account management module 150 may be configured to manage storage of and access to information about individual customers including user accounts 152 and corresponding user profiles, which may include descriptive information about settings, approvals, or management paradigms that apply to specific vendors or transactions for each instance of the user accounts 152. The user accounts 152 may include details of the checking or savings account at the customer bank for each customer and respective client 20, and authorizations to check account status for each.

In an example embodiment, the account management module 150 may handle internal processing of the communications with the clients 20 associated with setting up the user accounts 152. The communications themselves may, however, in some cases by managed by a transaction management module 160 as noted below. The user profile associated with each respective one of the user accounts 152 may include user preferences, entitlements, or authorizations (e.g., credit limits) with respect to the amount of debt each user is enabled to take on either in aggregate, on a transaction by transaction basis, on a vendor basis, or with respect to specific types of goods or services. Each transaction may, for example, be authorized only if rules associated with either user preferences or facilitator policies that the customer has reviewed and accepted as terms of service are met. Those rules may be established during account setup and recorded for each of the user accounts 152 of potentially many different users by the account management module 150. However, in some examples, the rules may be revisited, and in particular the terms of service may be reviewed and accepted prior to execution of each transaction. This review also enables the customer to make changes to the functionality of the virtual card in between transactions (e.g., prior to each transaction). Thus, the way the transaction will be handled can be modified in between uses, and prior to each new transaction under the control of the transaction management module 160 and in cooperation with the account management module 150. As noted above, the user accounts 152 may also have corresponding account details including the persistent PAN associated with the account. Thus, the PAN of the virtual card never changes even though the terms associated with each transaction may change, and even though each transaction may be entirely distinct from other prior or subsequent transaction. This creates a one-to-many relationship between the virtual card (and particularly the PAN) and the transactions that are conducted using the virtual card. This one-to-many relationship between the virtual card, and its persistent PAN, and multiple transactions and corresponding loans associated with each respective transaction, is one of the distinctive aspects of the virtual card that is both novel and useful, but also creates technical challenges not previously encountered.

In an example embodiment, the facilitation agent 44 may also include the transaction management module 160 mentioned above. The transaction management module 160 may coordinate or facilitate all communications with the parties to the SFP platform 10 in association with each transaction that is initiated by a customer. As such, the transaction management module 160 may be configured to receive indications of incoming communications and provide responses thereto. Moreover, in some cases, the transaction management module 160 may provide instructions for the generation of specific user interface consoles, pages, screens, or display components (including the generation of the virtual card) that may be used at the client 20 to enable the customer to interact with the facilitation agent 44 to obtain services from the facilitation agent 44 that may include affecting transactions using the virtual card to generate multiple loans for corresponding multiple transactions, while associating all such loans and transactions with a single persistent PAN.

As an example, the transaction management module 160 may receive an indication of a pending transaction and, upon approval of the transaction (e.g., by operation of the authentication agent 50) may authorize a transfer of funds from the issuing bank to the vendor on behalf of the customer (associated with one of the clients 20). When the funds are transferred, a loan may be originated by the facilitation agent 44 according to the terms agreed to by the customer when the virtual card was created. Payments may be made also according to the agreed upon terms, and may include cooperation with the customer bank and/or payment processor 80. The transaction management module 160 may therefore coordinate communications associated with conducting fund transfers for transactions. However, the transaction management module 160 may also drive the technical platform and operations that control the provision of the virtual card with its persistent PAN, and the technical handling of both the operation of the virtual card in preparation and use, as well as the handling of activities that do or can occur after use of the virtual card. Thus, the transaction management module 160 may manage communications for account setup and management, for obtaining the virtual card, for conducting transactions using the virtual card, and for various activities that may occur after use of the virtual card including return processing.

In this regard, FIG. 3 illustrates a block diagram of a process for utilizing a virtual card having a persistent PAN in accordance with an example embodiment. The process shown in FIG. 3 generally focuses on operations handled by the transaction management module 160. However, it should be appreciated that the account management module 150 and the security module 140 may also contribute to the operations shown in FIG. 3 in some cases. For example, operation 200 includes setting up an account to establish the virtual card with the persistent PAN, which clearly includes actions associated with the account management module 150, although communications may be managed by the transaction management module 160 and secured by the security module 140.

The account setup itself may be conducted online (e.g., via a client/server communication paradigm) either in advance of any particular transaction being conducted, or online at the time that a transaction is being conducted as a means to pay for the transaction. Doing so online at the time of a transaction may be performed at checkout (either a physical checkout at a brick and mortar store, or again online while shopping via the Internet and checking out to pay for the transaction). As noted above, the transaction management module 160 may provide graphical interfaces (e.g., via APIs or other mechanisms) at the client 20 to enable the customer to enter all needed information to establish the customer account and have the virtual card associated therewith.

Although other functions may be integrated with the virtual card, a primary function that is the focus of this disclosure may include the arrangement of transferring funds arranged by the facilitator to the merchant or vendor on behalf of the customer to pay for goods or services that form the basis for a transaction. The facilitator transfers the funds on behalf of the customer, and establishes a loan between the customer and the facilitator (or another organization associated with the facilitator). In conjunction with the account setup, various card settings must be selected to enable the virtual card to be ready for use. For example, at operation 210, a payment plan must be selected (or confirmed) for settlement of the transaction. Although not required, the typical settlement arrangement will be to define loan terms to associate a loan with the transaction. The final settlement will occur when the loan is fully repaid (along with any interest or finance charges). However, the terms of the loan are selectable (or confirmable) by the customer in advance of each transaction. Moreover, these terms will be selected during account setup to define a default or normal mode for treatment of each transaction. The default mode will normally always be presented for acceptance prior to each transaction, and may simply be accepted again, or may be changed. When changed, the transaction management module 160 may employ the changed terms for the current (or immediately next) transaction, but may revert to the default settings for each subsequent transaction thereafter. However, in some embodiments, the transaction management module 160 may also enable the user to change the default settings to new terms.

In an example embodiment, the payment plan selected may effectively define the character and/or nature of the loan that will be obtained to initiate the transfer of funds. Although many loan types may be possible, and BNPL loan options may be one typical option, an example embodiment may enable the customer to select between a split pay option (e.g., where payments totaling the amount of the loan are split up over a period of time for repayment), or an interest bearing loan (e.g., where interest is applied depending on the balance remaining, and only minimum payments are required over time until the loan is paid off), among other options.

After the payment plan is selected (or confirmed), the repayment method may also be selected (or confirmed) at operation 220. The repayment method may be, for example, an automatic payment option in which the customer authorizes the facilitator to extract payments from a bank account of the customer (e.g., via customer bank agent 70 of FIG. 1). Alternatively, the customer may make the payments by check, wire transfer, or other payment methods including those established via the payment processor 80.

Both operations 210 and 220 may be repeated before each and every transaction. However, as noted above, the first time such operations are performed may be used to set the default mode for subsequent transactions. Thus, for the subsequent transactions, operations 210 and 220 may be relatively quickly repeated by presenting the customer with an option to accept the default settings. In some cases, the query for acceptance may accompany a presentation of the terms and acknowledgement/acceptance of the same by the customer may be required to permit the virtual card to be used for the current or immediate next transaction.

After operations 210 and 220, the transaction management module 160 may also provide instructions for the generation of the virtual card itself at the client 20, such that the virtual card is made ready for use by the client 20 (e.g., a personal communication device of the customer) at operation 230. The making of the virtual card ready for use may, for initial usage, include generation of the virtual card itself. The virtual card may be generated visually on the screen of the client 20, and may accompany short range wireless communication capability provided by the client 20 to cause the transaction to be conducted with the vendor or merchant (e.g., via tap-to-pay or other similar technologies). In some cases, the virtual card may be provided in wallet application at the client 20, and may be easily recalled for presentation to the vendor or merchant for usage from the wallet application. Various tools for automatic filling of information from the virtual card into payment fields or checkout pages of vendors or merchants may also be integrated into the transaction management module 160.

In some embodiments, making the virtual card ready for use may also include incorporating any bonus or boost credits into a given transaction. For example, certain merchants may cooperate with the facilitator to offer advantages or value boosts to the customer when the virtual card is used for transactions with the merchant. The customer may be informed either in-store or at the checkout regarding such bonus or boost credit. However, in other cases, merchants may inform the customer of the opportunity to obtain boost credit through email, SMS, or other notifications independent of any specific transaction.

After operations 210 to 230, use of the virtual card may be undertaken at operation 240. In some cases, for the first usage of the virtual card, each of operations 210, 220 and 230 may be distinct operations. However, when used for a subsequent transaction, operations 210 to 230 may be integrated into a confirmation step, and accessing the virtual card via the wallet, or other relatively seamless activities that make the operations seem like a single integrated step that precedes operation 240. In any case, operation 240 includes using the virtual card either in-store at a physical checkout or electronically via an online checkout to conduct a transaction. The conduct of the transaction causes monetary transfers as described above on behalf of the customer and to the vendor/merchant, while also creating a loan for the customer for the amount of the transaction (plus any interest or finance charges). The loan is setup in accordance with the settings defined in operation 210, and payments are thereafter conducted as setup in operation 220, and services related to the loan may be performed thereafter.

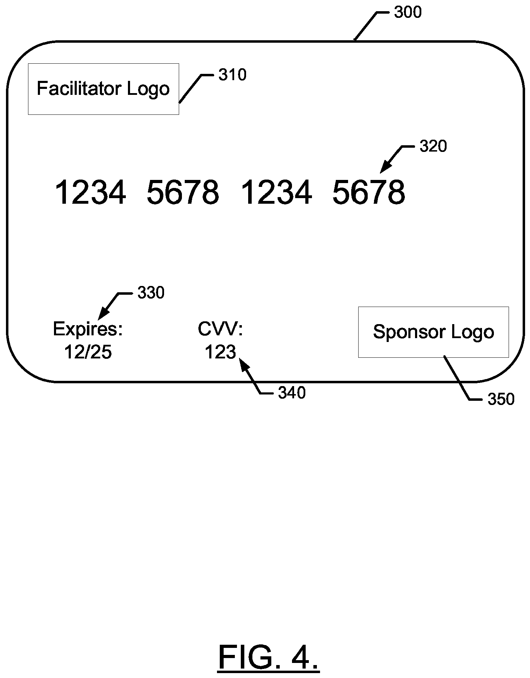

An example of a virtual card is shown in FIG. 4 as virtual card 300, and will be described in greater detail below. As shown in FIG. 4, the virtual card 300 may include all the hallmarks of a typical virtual card including a facilitator logo 310 identifying the facilitator (or an organization associated therewith), a card number 320 (which may be the persistent PAN, or which may be associated therewith), an expiration date 330, a security code 340, and a card sponsor logo 350. The virtual card 300 may be used either by filling (automatically or manually) details of the virtual card 300 (e.g., the card number 320, expiration date 330 and security code 340) into the payment interfaces of an online vendor, or by wireless communication (e.g., tap to pay) with a device of the vendor or merchant that facilitates such payment. The virtual card 300 may be generated on the client 20 device of the customer in operation 220 above, and may be placed in the wallet application of the customer on the client 20, and remain ready for use.

As noted above, in some examples, the use of the virtual card to conduct a transaction may create a loan that is associated with the persistent PAN of the customer account. The persistent PAN is the same for the virtual card for each and every transaction, so that the same persistent PAN can be used to create many different loans potentially. Contrary to conventional practice via which the PAN is associated with one transaction and one loan, so a return or any other servicing or modification that occurs after the creation of the loan can easily be tracked with the PAN, the persistent PAN makes a one-to-many relationship between the persistent PAN and loans. This can make provision of services after loan origination complicated.

One particular loan service that may be complicated by the one-to-many relationship between the persistent PAN and loans/transactions is return processing. In this regard, for a conventional situation in which the PAN has a one-to-one relationship with a single transaction that forms the basis for a loan, a product return associated with the transaction can be easily handled by crediting the value of the returned product against the loan. However, this simple process is not possible when multiple loans or transactions are all associated with the same persistent PAN. Instead, the return of a single product cannot easily be correlated to any particular loan, and the terms of each loan may also be different for reasons noted above, so the lack of clarity in this regard is potentially significantly impactful. Thus, the transaction management module 160 must employ additional technical capability to deal with this problem.

In an example embodiment, the transaction management module 160 may be further configured to employ a multi-step approach to matching product returns to the correct loan and transaction that are associated with the product being returned. In this regard, the transaction management module 160 may be configured to, for each returned product, attempt to determine which transaction, and therefore which loan, corresponds to the product being returned. When the transaction, and loan, can be identified properly, then the cost of the return may be refunded to the customer against the properly identified loan. The loan can be modified accordingly including, if applicable, settling the loan entirely by paying off the loan, or reducing the principle owed and consequently reducing payment amounts accordingly.

FIG. 5 illustrates a block diagram of the multi-step process for correlating product returns to respective loans/transactions in accordance with an example embodiment. As shown in FIG. 5, the customer may initiate a product return at operation 400. The product return may be initiated either by bringing the product to a store in-person, where the merchant may provide data entry into the SFP platform 10. However, in other cases, the customer may utilize online resources (e.g., a return processing application or service) to initiate the return and therefore provide data entry into the SFP platform 10. In either case, the transaction management module 160 may ultimately process the data entered to correlate the returned product to its respective loan via the operations of FIG. 5.

In an example embodiment, the transaction management module 160 may be configured to store (e.g., in memory 104) a listing of each transaction associated with the persistent PAN along with other identifying information. The identifying information may include a merchant identity and a transaction amount. In some embodiments, the identifying information could include other information such as, for example, a location of the transaction, date and/or time of the transaction, or any other information that may be useful for distinguishing the transaction from other transactions. Thus, for example, each of the user accounts 152 may list the transactions and identifying information for the corresponding user accounts 152.

After product return has been initiated, the merchant may issue a refund (fully or partially) at operation 410. The refund may be issued, in some cases, via an intermediary (e.g., the payment processor 80) or may be provided via the facilitator. In either case, the refund may include refund information that indicates at least the refunding merchant identity for the refunded product and the refund amount. The transaction management module 160 may then be configured to determine a merchant identity match for the refund at operation 420. The transaction match may be accomplished, for example, by comparing the refunding merchant identity to the identifying information stored by the transaction management module 160 for prior transactions. If the refunding merchant identity matches the merchant identity for a prior transaction, it may be likely that the transaction is matched. Multiple transactions with the same merchant may, however, complicate this determination. Thus, at operation 430, even if a match occurs at operation 420, a further determination may be made as to whether there are multiple transactions for the same merchant. If not, then there is a very strong likelihood that the refunded product correlates to the transaction for which the match was secured. The transaction may therefore be matched to a corresponding loan and the loan may be adjusted by the refund amount at operation 440.

If at operation 420, no match can be determined, then the facilitator may issue a check or provide credit (e.g., via voucher or monetary transfer of funds to the customer bank) to the customer in the refund amount at operation 450. Meanwhile, if a match was determined at operation 420, but there were multiple transactions for the merchant identity at operation 430, then a further comparison may be made to determine whether the refund amount matches the transaction amount at operation 460. If matched, flow may proceed to operation 440, but if not matched at operation 460, then flow may proceed to operation 450. Multiple transactions with the same merchant for the same amount may, however, complicate this issue. In such cases, although not shown in FIG. 5, a further comparison of transaction dates and/or times, or any other available identifying information, may be employed to identify a specific one of such multiple transactions.

Operation 440 results in an adjustment to the correct loan, so that the customer seamlessly either has the loan settled or adjusted to reflect the refund. Operation 450 results in the customer receiving money or credit, but the customer's loan is not adjusted or settled and payments according to the payment plan continue. The customer may then manually apply funds to the corresponding loan, if desired.

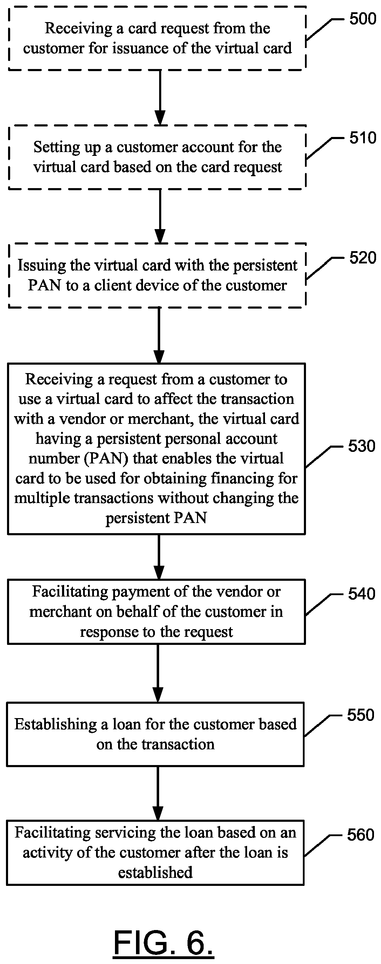

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 6 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of processing communications and actions of parties to a transaction is shown in FIG. 6. The method may include receiving a request from a customer to use a virtual card to affect the transaction with a vendor or merchant at operation 530. The virtual card may have a persistent primary account number (PAN) that enables the virtual card to be used for obtaining financing for multiple transactions without changing the persistent PAN. The method may further include facilitating payment of the vendor or merchant on behalf of the customer in response to the request at operation 540, establishing a loan for the customer based on the transaction at operation 550, and facilitating servicing the loan based on an activity of the customer after the loan is established at operation 560. Although not required, the method may also include additional initial operations including receiving a card request from the customer for issuance of the virtual card at operation 500, setting up a customer account for the virtual card based on the card request at operation 510, and issuing the virtual card with the persistent PAN to a client device of the customer at operation 520.

In an example embodiment, an apparatus for performing the method of FIG. 6 above may comprise a processor (e.g., the processor 102) or processing circuitry configured to perform some or each of the operations (500-560) described above. The processor may, for example, be configured to perform the operations (500-560) by performing hardware implemented logical functions, executing stored instructions, or executing algorithms for performing each of the operations. In some embodiments, the processor or processing circuitry may be further configured for additional operations or optional modifications to operations 500 to 560.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, issuing the virtual card may include providing instructions to the client device for graphical display of the virtual card at the client device. In an example embodiment, setting up the customer account may include receiving a selection of a payment plan to associate with the loan, and receiving a selection of a repayment method for making payments on the loan. In some cases, the selection of the payment plan and the selection of the repayment method may be defined as default settings to be presented visually to the customer at the client device prior to each subsequent transaction financed via the virtual card. In an example embodiment, prior to authorizing each subsequent transaction after a first transaction using the virtual card and the persistent PAN, the customer may be prompted to accept the default settings or to define an update to one or both of the payment plan and the repayment method. In some cases, facilitating servicing of the loan may include receiving an indication of a refund for a returned product, attempting to determine a corresponding transaction and corresponding loan to the returned product, and applying the refund to the corresponding loan in response to successfully determining the corresponding loan. In an example embodiment, attempting to determine the corresponding transaction may include comparing a list of stored merchant identities from past transactions to a refunding merchant identity to determine a match between one of the stored merchant identities and the refunding merchant identity. In some cases, attempting to determine the corresponding transaction may further include, in response to determining the match, determining if multiple transactions occurred for the refunding merchant identity to, if not, apply the refund to the corresponding loan, and if so, provide a refund check or refund credit to the customer.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of processing communications and actions of parties to a transaction, the method comprising:
receiving a request from a customer to use a virtual card to affect the transaction with a vendor or merchant, the virtual card having a persistent primary account number (PAN) that enables the virtual card to be used for obtaining financing for multiple transactions without changing the persistent PAN;
facilitating payment of the vendor or merchant on behalf of the customer in response to the request;
establishing a loan for the customer based on the transaction; and
facilitating servicing the loan based on an activity of the customer after the loan is established.

2. The method of claim 1, further comprising:
receiving a card request from the customer for issuance of the virtual card;
setting up a customer account for the virtual card based on the card request; and
issuing the virtual card with the persistent PAN to a client device of the customer.

3. The method of claim 2, wherein issuing the virtual card comprises providing instructions to the client device for graphical display of the virtual card at the client device.

4. The method of claim 2, wherein setting up the customer account comprises receiving a selection of a payment plan to associate with the loan, and receiving a selection of a repayment method for making payments on the loan.

5. The method of claim 4, wherein the selection of the payment plan and the selection of the repayment method are defined as default settings to be presented visually to the customer at the client device prior to each subsequent transaction financed via the virtual card.

6. The method of claim 5, wherein, prior to authorizing each subsequent transaction after a first transaction using the virtual card and the persistent PAN, the customer is prompted to accept the default settings.

7. The method of claim 5, wherein, prior to authorizing each subsequent transaction after a first transaction using the virtual card and the persistent PAN, the customer is prompted to define an update to one or both of the payment plan and the repayment method.

8. The method of claim 1, wherein facilitating servicing of the loan comprises:
receiving an indication of a refund for a returned product;
attempting to determine a corresponding transaction and corresponding loan to the returned product; and
applying the refund to the corresponding loan in response to successfully determining the corresponding loan.

9. The method of claim 8, wherein attempting to determine the corresponding transaction comprises comparing a list of stored merchant identities from past transactions to a refunding merchant identity to determine a match between one of the stored merchant identities and the refunding merchant identity.

10. The method of claim 9, wherein attempting to determine the corresponding transaction further comprises, in response to determining the match, determining if multiple transactions occurred for the refunding merchant identity to:
if not, apply the refund to the corresponding loan, and
if so, provide a refund check or refund credit to the customer.

11. An apparatus for processing communications and actions of parties to a transaction, the apparatus comprising processing circuitry configured to perform the method of any of claims 1-10.
